# EUROPÄISCHE PATENTSCHRIFT

(11) **EP 2 043 811 B1**
(45) Veröffentlichungstag und Bekanntmachung des Hinweises auf die Patenterteilung: **14.08.2013**
(21) Anmeldenummer: 07725863.0
(22) Anmeldetag: 06.06.2007
(51) Int. Cl.: B23K 26/38, B23K 26/42, B60R 21/215

(54) **VERFAHREN ZUR HERSTELLUNG EINES VERKLEIDUNGSTEILS**
METHOD FOR THE PRODUCTION OF A LINING PIECE
PROCÉDÉ DE FABRICATION D'UN ÉLÉMENT DE GARNITURE

(30) Priorität: 18.07.2006 DE 102006033587
(43) Veröffentlichungstag der Anmeldung: 08.04.2009
(73) Patentinhaber: Johnson Controls Interiors GmbH & Co. KG, 47929 Grefrath (DE)
(72) Erfinder: ASMUS, Uwe, 47918 Tönisvorst (DE); HARNISCH, Hartmut, 47929 Grefrath (DE); RENNER, Dieter, 47906 Kempen (DE)
(74) Vertreter: Hemmelmann, Klaus
(86) Internationale Anmeldenummer: PCT/EP2007/005003
(87) Internationale Veröffentlichungsnummer: WO 2008/009331

(56) Entgegenhaltungen:
- JP-A- 2006 167 727

## Beschreibung

Die Erfindung betrifft ein Verfahren zur Herstellung eines Verkleidungsteils für den Innenraum eines Kraftfahrzeugs, mit einer Dekorschicht, welche zur Einbringung einer Sollbruch- oder Knickstelle durch Behandlung mit einem Laserstrahl geschwächt und dabei im Bereich der Laserbehandlung gekühlt wird, wobei die Kühlung durch Verdunstung einer Flüssigkeit erzeugt wird.

### Stand der Technik

Es ist bekannt, Sollbruch- oder Knickstellen in Verkleidungsteile für Kraftfahrzeuge durch Bearbeitung mit einem Laserstrahl einzubringen, beispielsweise im Bereich einer Airbag-Austrittsklappe. Es ist gewünscht, dass eine solche Austrittsklappe im Wesentlichen unsichtbar ist, im Falle eines Unfalls jedoch den sich entfaltenden Airbag zuverlässig und ohne Entstehung von Partikeln austreten lässt. Es ist ferner bekannt, bei hochwertigen Fahrzeugen Verkleidungsteile mit einer Dekorschicht aus Leder zu versehen.

Wird ein derartiges Lederdekor jedoch mit einem Laser bearbeitet, kann durch die Koagulation (und damit der Schrumpfung) von Kollagenfasern in der oberen Lederhautschicht jedoch eine Materialaufwerfung entstehen, welche die Schwächungslinie vom Fahrzeuginnenraum her sichtbar werden lässt.

Die japanische Patentanmeldung JP 2006 167727 A (D1) beschreibt ein gattungsgemäßes Verfahren zum Kühlen eines Verkleidungsteils. Das Kühlen erfolgt durch Aufsprühen einer Kühlflüssigkeit während der Laserbehandlung und dient zum Einbringen einer Sollbruchstelle in ein Verkleidungsteil aus einem Träger, der sichtseitig mit einer Folie aus einem thermoplastischen Polyolefin (TPO) bedeckt ist. Dazu wird das Verkleidungsteil rückseitig mit einem Laserstrahl behandelt, während auf die Gegenseite gleichzeitig eine Kühlflüssigkeit aufgesprüht wird, um ein Entflammen des Bauteils zu verhindern. Dieses Vorgehen setzt eine Synchronisation von Laserbehandlung und Sprühvorgang voraus, die apparativ relativ aufwändig ist. Darüber hinaus steht die Kühlflüssigkeit an der unmittelbar vom Laserstrahl erfassten Oberfläche der Dekorschicht nicht zur Verfügung.

Ein weiteres Verfahren ist aus der deutschen Patentanmeldung DE 103 52 524 A1 bekannt. Das zur Schwächung mittels Laserbehandlung vorgesehene Lederdekor wird zuvor auf seiner B-Seite, welche am fertigen Verkleidungsteil nicht sichtbar ist, im Bereich der Sollbruch- oder Knickstelle mit einem Fixiermittel behandelt, beispielsweise einem Haarlack oder Pflasterspray. Nach dem Trocknen des teilweise in das Leder eingedrungenen Fixiermittels wird, gleichfalls von der B-Seite der Dekorschicht her, die Laserbehandlung vorgenommen. Zusätzlich wird das Leder unmittelbar vor der Laserbearbeitung entlang der gewünschten Schwächungslinie unterkühlt. Durch diese Maßnahmen soll vermieden werden, dass die Sollbruch- oder Knickstelle von der A-Seite der Dekorschicht, also der späteren Sichtseite, her erkennbar ist.

In der Druckschrift DE 103 50 220 A1 wird ein Verfahren zur Herstellung einer Sollbruchstelle in ein Verkleidungsteil beschrieben, bei welchem während der Laserbehandlung auf die gegenüberliegende Flächenseite synchron im Bereich der Bearbeitung ein gasförmiger Kühlmediumstrom gerichtet wird, insbesondere Druckluft.

Diese vorbekannten Verfahren konnten die Probleme bei der Laserbehandlung von Leder noch nicht zufrieden stellend lösen.

### Aufgabe

Der Erfindung liegt die Aufgabe zugrunde, den apparativen Aufwand bei der Bearbeitung besonders hochwertiger Verkleidungsteile, insbesondere aus Leder, zu verringern und die Kühlwirkung zu verbessern.

### Lösung

Die Aufgabe wird erfindungsgemäß dadurch gelöst, dass die Sollbruch- oder Knickstelle in eine saugfähige Dekorschicht, insbesondere aus Leder, eingebracht wird und dass die Flüssigkeit vor der Laserbehandlung im Bereich der Sollbruch- oder Knickstelle in die Dekorschicht eingebracht wird.

Eine für diese Anwendung üblicherweise geeignete Flüssigkeit ist destilliertes Wasser, das eine ausreichende Verdampfungsenthalpie (und damit Kühlwirkung) aufweist und bei dessen Verdunstung keine schädlichen Gase entstehen.

### Figuren

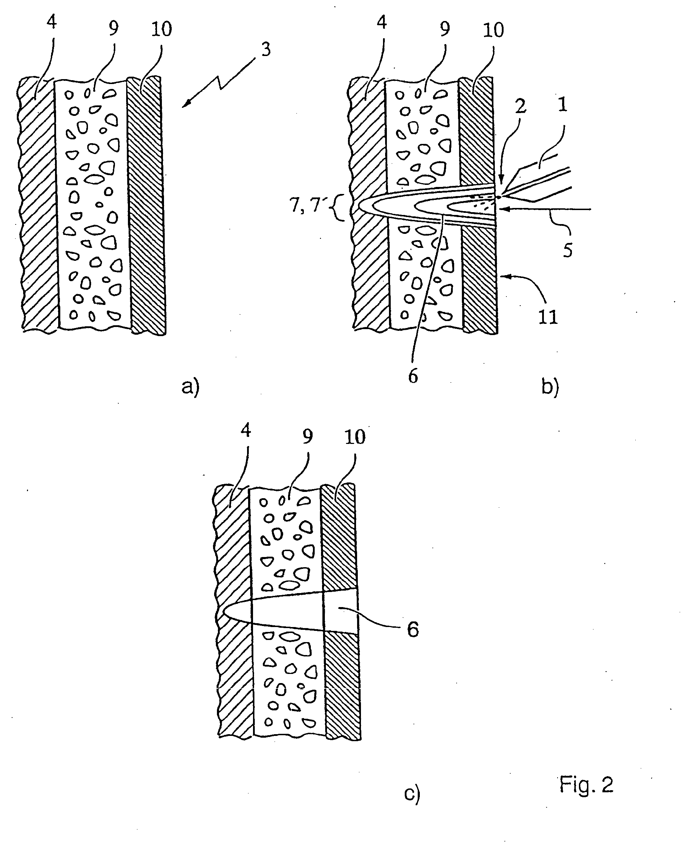

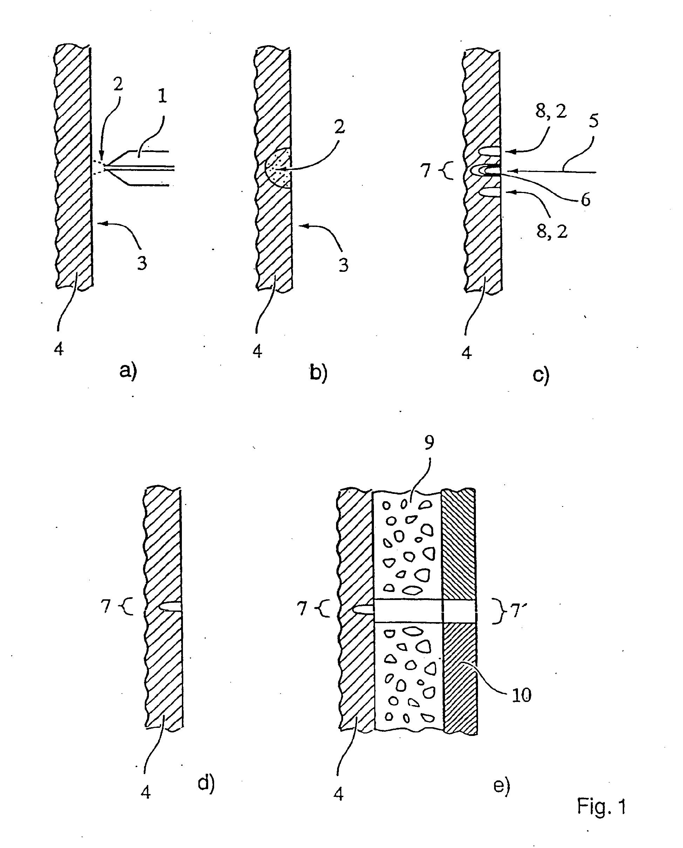

Die Figuren stellen beispielhaft und schematisch eine Ausführung der Erfindung dar. Die Figuren 1 a) bis e) zeigen dabei den Ablauf eines erfindungsgemäßen Verfahrens.

Bei der Anwendung des in Fig. 1 gezeigten Verfahrens wird zunächst mittels einer Düse 1 entlang der gewünschten Schwächungszone eine Flüssigkeit 2 auf die B-Seite 3 einer Dekorschicht 4 ausgesprüht (Fig. 1 a), welche in das saugfähige Material, insbesondere Leder oder Textil, eindringt (Fig. 1 b). Nachfolgend wird von der B-Seite 3 her ein gepulster Laserstrahl 5 auf die B-Seite 3 gerichtet (Fig. 1c), welcher sacklochartige Bohrungen 6 (gegebenenfalls auch einen durchgehenden Schnitt) in der Dekorschicht 4 erzeugt und beim Verfahren entlang der gewünschten Schwächungszone eine linienförmige Sollbruchstelle 7 erzeugt. Die von dem Laserstrahl 5 bewirkte Hitze verdampft dabei nicht nur Bestandteile des Leders, sondern auch große Mengen der zuvor gesondert eingebrachten Flüssigkeit 2, von der unmittelbar nach der Laserbehandlung nur noch Restmengen 8 in der Dekorschicht 4 zu finden sind. Im Anschluss an eine Nachtrocknung, die gegebenenfalls bei Raumtemperatur über einen ausreichend großen Zeitraum hinweg erfolgen kann, ist das mit der Sollbruchstelle 7 versehene Dekormaterial zur Weiterverarbeitung bereit (Fig. 1d) und kann mit seiner B-Seite 3 beispielsweise auf einen mit einer Schaumschicht 9 versehenen Träger 10 aufgezogen werden, der mit einer deckungsgleichen Sollbruchstelle 7' versehen ist (Fig. 1e).

Durch die Anwendung des erfindungsgemäßen Verfahrens kann die Schwächung der Dekorschicht 4 insbesondere auch durch Laserstrahlen 5 erfolgen, die nicht von einem CO2-Laser, sondern von thermisch kritischeren Laserquellen erzeugt wurden.

### Bezugszeichen

- 1: Düse
- 2: Flüssigkeit
- 3: B-Seite
- 4: Dekorschicht
- 5: Laserstrahl
- 6: Bohrung
- 7: Sollbruchstelle
- 8: Restmenge (der Flüssigkeit)
- 9: Schaumschicht
- 10: Träger
- 11: Rückseite (des Trägers)

## Patentansprüche

1. Verfahren zur Herstellung eines Verkleidungsteils für den Innenraum eines Kraftfahrzeugs, mit einer Dekorschicht (4), welche zur Einbringung einer Sollbruch- oder Knickstelle (7) durch Behandlung mit einem Laserstrahl (5) geschwächt und dabei im Bereich der Laserbehandlung gekühlt wird, wobei die Kühlung durch Verdunstung einer Flüssigkeit (2) erzeugt wird, **dadurch gekennzeichnet, dass** die Sollbruch- oder Knickstelle (7) in eine saugfähige Dekorschicht (4), insbesondere aus Leder, eingebracht wird und dass die Flüssigkeit (2) vor der Laserbehandlung im Bereich der Sollbruch- oder Knickstelle (7) in die Dekorschicht (4) eingebracht wird.

## Claims

1. Method for producing a trim part for the interior of a motor vehicle, having a decorative layer (4) which is weakened by treatment with a laser beam (5), in order to introduce a predetermined break or buckling point (7), and is cooled in the process in the region of the laser treatment, the cooling action being generated by evaporation of a liquid (2), **characterized in that** the predetermined break or buckling point (7) is introduced into an absorbent decorative layer (4), in particular made from leather, and **in that** the liquid (2) is introduced into the decorative layer (4) in the region of the predetermined break or buckling point (7) before the laser treatment.

## Revendications

1. Procédé de fabrication d'un élément de garniture pour l'espace interne d'un véhicule automobile, comprenant une couche décorative (4) qui est affaiblie pour l'introduction d'un point destiné à la rupture ou d'un point de fléchissement (7) par traitement avec un faisceau laser (5) et qui est en l'occurrence refroidie dans la zone du traitement laser, le refroidissement étant produit par vaporisation d'un liquide (2), **caractérisé en ce que** le point destiné à la rupture ou le point de fléchissement (7) est introduit dans une couche décorative (4) absorbante, en particulier en cuir, et **en ce que** le liquide (2) est introduit avant le traitement laser dans la couche décorative (4) dans la région du point destiné à la rupture ou du point de fléchissement (7).
